(19) Europäisches Patentamt

European Patent Office

Office européen des brevets

(11) **EP 0 729 108 A1**

(12) **DEMANDE DE BREVET EUROPEEN**

(43) Date de publication:
**28.08.1996 Bulletin 1996/35**

(51) Int Cl.$^6$: **G06F 17/50**

(21) Numéro de dépôt: **96400236.4**

(22) Date de dépôt: **05.02.1996**

(84) Etats contractants désignés:
**DE ES GB IT SE**

(30) Priorité: **14.02.1995 FR 9501752**

(71) Demandeur: **INSTITUT FRANCAIS DU PETROLE**
**F-92500 Rueil-Malmaison (FR)**

(72) Inventeur: **Leger, Michel**
**92500 Rueil-Malmason (FR)**

(54) **Méthode pour déterminer la forme optimale à donner à une plaque ou analogue déplaçable par rapport à une paroi ou dans un logement étroit**

(57) -La méthode concerne le profilage de plaques telles que des tôles, des vitres ou autres objets de faible épaisseur, destinés notamment à s'escamoter complètement dans le but de dégager une ouverture. Pour simplifier la mise en oeuvre de plaques profilées ayant déjà fait l'objet d'une pré-conception, on les modifie pour que leur forme coïncide sensiblement avec une surface "vissable" choisie parmi la grande variété existante de surfaces satisfaisant à des critères de vissabilité et donc capables de se déplacer dans l'espace sans changer de position, leurs bords exceptés. La mise en oeuvre de la méthode permet de satisfaire plus facilement aux contraintes diverses qui peuvent exister dans la conception de telles plaques.

- Application à l'industrie automobile par exemple.

**FIG.4**

**Description**

La présente invention concerne une méthode pour déterminer la forme optimale à donner à une plaque ou analogue déplaçable par rapport a une paroi ou dans un logement étroit.

La méthode s'applique à des plaques profilées telles que des tôles, des vitres ou autres objets de faible épaisseur, destinés à être déplacés dans un logement étroit, et notamment à s'escamoter complètement dans le but notamment de dégager une ouverture.

La méthode s'applique notamment à l'optimisation de la forme des vitres mobiles de véhicules automobiles de façon à simplifier la conception éléments de carrosserie incluant ces vitres mobiles.

La méthode selon l'invention peut facilement être mise en oeuvre dans les systèmes connus de CFAO (conception et fabrication assistée par ordinateur). Dans un premier temps, les techniques de CAO (conception assistée par ordinateur) sur stations de travail permettent de dessiner des carrosseries en fonction d'impératifs divers: habitabilité, aérodynamisme, esthétique etc. On élabore des dessins de surfaces constituées de différents éléments, certains représentant des plaques escamotables telles que des vitres. Ces éléments de surface sont en général modélisés par des fonctions de conversion qui, à un couple de coordonnées curvilignes (u, v) comprises dans l'intervalle (0, 1), associent un triplet de coordonnées cartésiennes (x, y, z) définissant la position dans l'espace de chaque point de la surface, fonctions que les spécialistes désignent souvent par "splines".

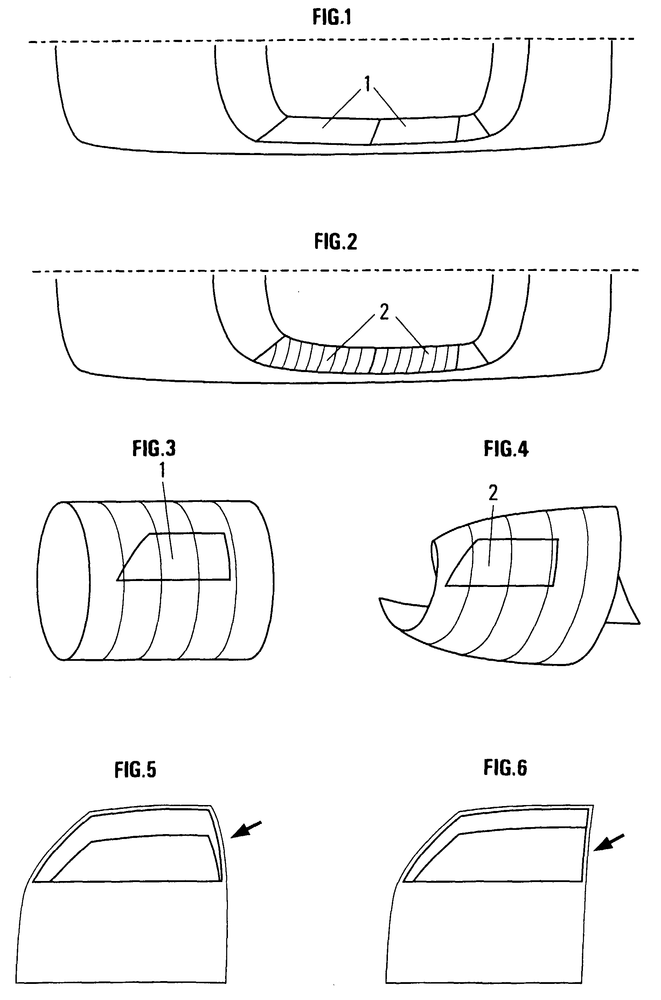

Dans la pratique industrielle actuelle, les vitres mobiles d'automobiles ont des formes simples (Fig.1). Elles sont planes ou en forme de cylindre à base circulaire (Fig.3). Ce choix de formes limité impose aux stylistes automobiles des contraintes relativement lourdes dans le dessin des carrosseries.

Une autre source de difficultés pour les stylistes est de conformer les montants des portières d'automobiles qui assurent le guidage des vitres mobiles, de façon que, durant leur coulissement, aucun jour latéral n'apparaisse. Cette contrainte leur est imposée pour des raisons de sécurité, afin d'éviter les risques de coincement de mains d'enfants par exemple, entre le bord des vitres et leurs montants, dans un jour qui se referme à leur remontée (Fig.5).

Léger, M. et al. dans l'article intitulé "Least-Squares Optimization of Fault Surfaces Using Rigid Block Approximation", in "Geophysical Journal International", décrivent une méthode permettant de définir un critère de "vissabilité" de surfaces dans le cadre d'une étude de la formation de failles géologiques par glissement de blocs rigides les uns par rapport aux autres, sans déformation.

Par analogie à ce qu'est un filetage en mécanique, on désigne par "filetage" toute surface qui possède la propriété de "vissabilité", c'est-à-dire qui peut se déplacer dans l'espace en gardant la même position, ou en d'autres termes, qui peut glisser tangentiellement à elle-même. Dans un tel déplacement il n'y a que les bords qui bougent. En termes mathématiques, on dit que les filetages sont invariants par une famille à un paramètre de déplacements. Un exemple, c'est la vis et l'écrou d'un boulon. Ils peuvent glisser l'un dans l'autre, avec une surface de contact qui est leur bord commun et qui le reste dans un mouvement de vissage.

Dans cette publication, on montre que pour un filetage, il existe un torseur non nul T qui est partout tangent à la surface, en désignant par torseur un champ vectoriel tel que:

$$T(B) = T(A) + \Omega_x \, AB \text{ pour tout couple de points A,}$$

B de l'espace euclidien R . Le vecteur $\Omega$ est partout le même dans l'espace. Si $\Omega \neq 0$, on définit un axe du filetage qui est l'ensemble des points tels que $T(A) = \mu\Omega/2\Pi$, où $\mu$ est le pas du filetage. Selon que $\mu > 0$ ou $\mu < 0$, le pas tourne à droite ou à gauche.

La méthode d'optimisation selon l'invention permet de déterminer la forme optimale de plaques mobiles minces, notamment de vitres, par exemple, destinées à être déplacées à proximité d'au moins une paroi courbe ou dans un logement étroit délimité par deux parois courbes en regard l'une de l'autre, tel que l'intérieur d'une portière de voiture par exemple.

Elle est caractérisée en ce que l'on donne à la plaque sensiblement une forme de filetage en lui imposant de vérifier un critère de vissabilité.

La méthode comporte par exemple une prédéfinition de la forme de la plaque en fonctions de contraintes imposées, de façon à obtenir une surface initiale, et le choix d'un type de filetage qui permet de minimiser les modifications à apporter à cette surface initiale.

Si, en particulier, la surface de la plaque est prédéfinie par des coefficients définissant la fonction qui relie les coordonnées curvilignes des points de la surface à leurs coordonnées cartésiennes, on définit un torseur T par d'autres coefficients et l'on détermine les valeurs de tous ces coefficients pour minimiser une fonction-coût mesurant l'espace entre la surface initiale et une surface vérifiant les critères de vissabilité.

La méthode proposée contribue à donner aux stylistes automobiles une plus grande liberté de conception car il existe une grande variété de formes possibles satisfaisant au critère de vissabilité, beaucoup plus générales que les formes cylindriques classiques. Un styliste peut donc facilement trouver la forme qui convient le mieux pour les éléments de carrosserie en cours d'élaboration, et respecter plus facilement de ce fait les contraintes nombreuses en matière d'aérodynamisme ou d'esthétique qui lui sont généralement imposées, sans pour autant que la fabrication ou le fonctionnement soient rendus plus compliqués, ou les coûts, sensiblement augmentés.

Dans le cas où, de plus, la plaque optimisée vérifiant le critère de vissabilité doit coopérer en opération avec des éléments de guidage latéraux, on peut imposer à ces éléments de guidage une forme hélicoïdale dont l'axe et le pas sont choisis en fonction de la forme de la plaque optimisée, de façon à éviter l'apparition d'un espace intersticiel.

Cette conformation particulière d'éléments de guidage peut contribuer à accroître la sécurité des passagers d'un véhicule, et en particulier des jeunes enfants.

L'invention concerne aussi une méthode de fabrication d'une plaque mince mobile telle qu'une vitre, destinée à être déplacée à proximité d'au moins une paroi courbe, qui est caractérisée en ce qu'elle comporte l'utilisation de moyens de formage de cette plaque adaptés à lui donner sensiblement la forme d'un filetage.

Elle concerne également un dispositif de guidage d'une plaque mobile optimisée comme on vient de le définir, qui est caractérisé en ce qu'il comporte des éléments de guidage latéral de la plaque de forme hélicoïdale, l'axe et le pas de l'hélice étant choisis en fonction de la forme de la plaque optimisée, de façon à supprimer sensiblement tout écart latéral entre les bords de la plaque optimisée et ces éléments de guidage.

L'invention porte aussi sur une méthode de fabrication d'une plaque mince courbe destinée à être déplacée à proximité d'au moins une paroi courbe ou dans un logement étroit délimité par deux parois courbes en regard l'une de l'autre, qui est caractérisée en ce que l'on réalise une matrice ou un moule de formage de la dite plaque, de façon que la plaque produite à partir de cette matrice ou ce moule possède une forme de filetage.

D'autres caractéristiques et avantages de la méthode selon l'invention et de ses applications, apparaîtront à la lecture de la description ci-après de modes de réalisation décrits à titre d'exemples non limitatifs, en se référant aux dessins annexés où:

- la Fig.1 montre schématiquement en vue de dessus, une partie latérale de carrosserie avec des vitres mobiles de forme simple;
- la Fig.2 est une vue analogue où les vitres sont formées en accord avec la méthode selon l'invention;
- les Fig.3, 4 montrent respectivement la première, une vitre mobile de forme cylindrique, la deuxième, une autre vitre en forme de filetage; et
- la Fig.5 montre schématiquement les écarts qui apparaissent habituellement entre les bords intérieurs des portières et les vitres mobiles d'automobiles quand on les abaisse; et
- la Fig.6 montre schématiquement une vitre qui peut coulisser dans sa rainure de guidage sans s'en écarter, dans le cas où l'on applique la méthode selon l'invention.

La méthode selon l'invention vise à optimiser la forme d'éléments mobiles minces telles que des plaques ou vitres obtenues par des techniques connues de CFAO. Elle s'applique en particuliers à l'optimisation des vitres latérales mobiles 1 d'automobiles (Fig.1) qui sont généralement planes ou cylindriques à base circulaire comme schématisé à la Fig.3.

La méthode s'applique à des éléments de surface initiales (planes ou cylindriques par exemple dans la pratique) pré-modélisés selon les techniques en usage dans le domaine de la CFAO, et traduits par des fonctions de conversion ou "splines".

Il s'agit de modifier les surfaces obtenues en imposant d'une part qu'elles soient des "filetages" et donc vérifient un critère de vissabilité aussi rigoureux que possible, et d'autre part qu'elles restent le plus proches possible des surfaces initiales.

On considère un vecteur dont les composantes sont des paramètres: les coefficients de la fonction de transformation de coordonnées (ou "spline") et les 6 coefficients d'un torseur T.

Définie d'une manière plus formelle et plus rigoureuse, la méthode consiste à trouver les composantes du vecteur qui minimisent la fonction-coût Q:

$$Q = Q1 + pf.Qf + pn.Qn. \qquad (1),$$

où pf et pn sont des facteurs de pondération des fonctions-coût partielles Qn et Qf.

Q1 est ici une fonction-coût mesurant l'écart entre la surface-filetage désirée et la surface initiale, et dont l'expression est:

$$Q1 = (1/2). \parallel P - P1 \parallel \text{ où:} \qquad (2)$$

P1 désigne les coordonnées ou paramètres du vecteur à l'issue de la phase initiale, P, celles du quasi-filetage désiré à l'issue de l'optimisation, et $\parallel P - P1 \parallel$ désigne la norme du vecteur (P-P1).

Qf mesure l'écart par rapport à un filetage parfait et il est défini par l'expression:

$$Qf = (1/2). \int < N(P).T(P) > dS \qquad (3),$$

T et N désignant respectivement, en chaque point de la surface S, le vecteur du torseur et la normale unitaire à cette surface.

Qn, enfin, est une fonction-coût qui empêche l'annulation du torseur T et qui est définie par la relation:

$$Qn = (1/2) (\int \parallel T \parallel dS - \int dS) \qquad (4).$$

En minimisant Qn, on contraint le module du torseur T à être proche de 1. La surface décrite par les coordonnées ou paramètres du vecteur P définissant la surface, sera un compromis entre les critères Qf et Q1, et en pratique, quasiment un filetage si le poids pf de la fonction-coût Qf est suffisant.

La détermination des paramètres du vecteur P définissant la surface, qui minimisent la fonction-coût, peuvent être déterminées suivant différents algorithmes connus, et notamment suivant la méthode de Gauss-Newton bien connue des spécialistes.

Les paramètres définissant la surface ayant été déterminés, peuvent ensuite être exploités par un logiciel de CAO tel que celui ayant servi à définir la plaque ou vitre initiale. Par l'application de la méthode, on modifie une surface pré-modélisée telle que la vitre simplement cylindrique 1 de la Fig. 3, de façon qu'elle devienne une portion de surface vissable 2 comme l'illustre la Fig.4.

La méthode selon l'invention peut trouver une autre application, connexe à la précédente par exemple, dans la détermination de la forme optimale à donner à des éléments de guidage d'une plaque mince pouvant coulisser en opération. Elle s'applique avantageusement pour conformer les bords intérieurs des montants de portières d'automobiles entre lesquels coulissent des vitres optimisées, dans le but d'améliorer la sécurité des usagers.

On remarque que les lignes de champ d'un torseur sont en effet des hélices. Si une surface est un filetage au sens précédemment défini, alors elle peut être considérée comme une famille d'hélices de même axe et de même pas.

La méthode selon l'invention appliquée au guidage de plaques ou vitres en forme de filetages, consiste à imposer de préférence aux bords en question la forme d'une hélice, de façon à coïncider au mieux, en permanence, avec le bord de ces plaques ou vitres. De cette façon, aucun jour n'apparaîtra (Fig.6) lors du coulissement de la vitre où une main enfantine pourrait se retrouver coincée.

La géométrie des plaques minces ou des vitres ayant été optimisée par la méthode selon l'invention, les données les concernant peuvent ensuite être utilisées dans des logiciels connus de pilotage de machines à commande numérique par exemple pour réaliser des matrices ou moules permettant leur réalisation industrielle.

## Revendications

1. Méthode d'optimisation pour déterminer la forme optimale à donner à une plaque mobile mince, telles que des vitres, par exemple, destinée à être déplacée à proximité d'au moins une paroi courbe ou dans un logement étroit délimité par deux parois courbes en regard l'une de l'autre, caractérisée en ce que l'on donne à la plaque sensiblement une forme de filetage en lui imposant de satisfaire un critère de vissabilité.

2. Méthode d'optimisation selon la revendication 1, caractérisée en ce que l'on prédéfinit la forme de la plaque en fonctions de contraintes imposées, de façon à obtenir une surface initiale, et l'on choisit le type de filetage qui permet de minimiser les modification à apporter à la surface initiale.

3. Méthode selon l'une des revendications précédentes, caractérisée en ce que la surface de la plaque étant définie par des coefficients reliant les coordonnées curvilignes des points de la surface à leurs coordonnées cartésiennes, on définit un torseur (T)

par d'autres coefficients et l'on détermine les valeurs de tous ces coefficients pour minimiser une fonction-coût mesurant l'espace entre la surface initiale et une surface vérifiant les critères de vissabilité.

4. Méthode selon l'une des revendications précédentes, caractérisée en ce que, la plaque optimisée qui vérifie le critère de vissabilité devant coopérer en opération avec des éléments de guidage latéraux, on impose à ces éléments une forme hélicoïdale dont l'axe et le pas sont choisis en fonction de la forme de la plaque optimisée.

5. Méthode de fabrication d'une plaque mince mobile telle qu'une vitre, destinée à être déplacée à proximité d'au moins une paroi courbe, qui est caractérisée en ce qu'elle comporte l'utilisation de moyens de formage de cette plaque adaptés à lui donner sensiblement la forme d'un filetage.

6. Dispositif de guidage d'une plaque mobile optimisée suivant la méthode définie par l'une des revendications 1 à 4, caractérisé en ce qu'il comporte des éléments de guidage latéral de la plaque qui sont en forme d'hélices, l'axe et le pas de ces hélices étant choisis en fonction de la forme de la plaque optimisée, de façon à supprimer sensiblement tout écart latéral entre les bords de la plaque optimisée et les éléments de guidage.

7. Plaque mince telle qu'une vitre, destinée à coulisser entre des éléments de guidage dans un véhicule, fabriquée en accord avec la méthode d'optimisation selon l'une des revendications 1 à 5.

**FIG.1**

**FIG.2**

**FIG.3**

**FIG.4**

**FIG.5**

**FIG.6**

# EP 0 729 108 A1

**Office européen des brevets**

## RAPPORT DE RECHERCHE EUROPEENNE

Numéro de la demande

EP 96 40 0236

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | CURVES AND SURFACES IN GEOMETRIC DESIGN, 1994, WELLESLEY MA US, pages 293-300, XP000564727 LEGER ET AL: "least-squares optimization of thread surfaces" * le document en entier * --- | 1,5 | G06F17/50 |
| A | COMPUTER AIDED DESIGN, vol. 21, no. 7, Septembre 1989, LONDON GB, pages 421-429, XP000101667 MARKOT ET AL: "solutions of tangential surface and curve intersections" --- | | |
| A | PROCEEDINGS SYMPOSIUM ON INTERACTIVE 3D GRAPHICS, 29 Mars 1992, CAMBRIDGE MASS US, pages 101-108, XP000308184 FOWLER: "geometric manipulation of tensor product surfaces" ----- | | |

**DOMAINES TECHNIQUES RECHERCHES (Int.Cl.6)**

G06T
G06F

Le présent rapport a été établi pour toutes les revendications

| Lieu de la recherche | Date d'achèvement de la recherche | Examinateur |
|---|---|---|
| LA HAYE | 10 Mai 1996 | Guingale, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)